# EUROPEAN PATENT SPECIFICATION

(11) **EP 0 829 064 B1**
(45) Date of publication and mention of the grant of the patent: **25.07.2001**
(21) Application number: 96920552.5
(22) Date of filing: 29.05.1996
(51) Int. Cl.: G06K 9/00

(54) **AN EYE LOCALIZATION FILTER**
FILTER ZUR AUGENLOKALISIERUNG
FILTRE DE LOCALISATION DES YEUX

(30) Priority: 02.06.1995 US 460610
(43) Date of publication of application: 18.03.1998
(73) Proprietor: SIEMENS CORPORATE RESEARCH, INC., Princeton, New Jersey 08540 (US)
(72) Inventor: FANG, Ming, Cranbury, NJ 08512 (US); SINGH, Ajit, Plainsboro, NJ 08536 (US); CHIU, Ming-Yee, Princeton Junction, NJ 08550 (US)
(74) Representative: Muir, Ian R.
(86) International application number: US9607911
(87) International publication number: WO9638808

(56) References cited:
- COMPUTER VISION ECCV'92, 12 May 1992, ST. MARGHERITA, IT, page 792-800 XP000578860 R. BRUNELLI ET T. POGGIO: "Face recognition through geometrical features"
- IECON'86 INT. CONF. ON IND. ELECTRONICS, CONTROL AND INSTRUMENTATION, vol. 1, 29 September 1986, MILWAUKEE, WI, USA, page 347-351 XP002011195 S. R. CANNON ET AL.: "A computer vision system for identification of individuals"
- 12TH IAPR. CONFERENCE B: PATTERN RECOGNITION AND NEURAL NETWORKS. , vol. 2, 9 October 1994, pages 39-43, XP000565428 CHANG T C ET AL: "FACIAL FEATURE EXTRACTION FROM COLOR IMAGES"
- PROCEEDINGS OF THE ANNUAL SYMPOSIUM ON COMPUTER BASED MEDICAL SYSTE, BALTIMORE, MAY 12 - 14, 1991, no. CONF. 4, 12 May 1991, BANKMAN I N;TSITLIK J E, pages 374-380, XP000350289 YOSHINOBU EBISAWA: "NON-INVASIVE EYE-GAZE POSITION DETECTING METHOD USED ON MAN/MACHINE INTERFACE FOR THE DISABLED"

## Description

The present invention relates to determining eye positions and more particularly to utilizing the relatively high horizontal-contrast density of the eye region in contrast with the greyscale image of a face.

For many visual monitoring and surveillance applications, it is important to determine human eye positions from an image sequence containing a human face. Once the human eye positions are determined, all of the other important facial features, such as positions of the nose and mouth, can easily be determined. The basic facial geometric information, such as the distance between two eyes, nose and mouth size, etc., can further be extracted. This geometric information can then be used for a variety of tasks, such as for recognizing a face from a given face database. The eye localization system can also be directly used for detecting the sleepy behavior of a car driver.

Some techniques exist for eye localization based on the Hough transform, geometry and symmetry checks and deformable models. Most of these techniques are not sufficiently robust against shape changes. These systems also require an extensive amount of computer processing time. Furthermore, none of these existing systems can locate eyes when the eyes are closed.

The present invention, as defined in claims 1 and 8, concerns a method and system for fast eye localization which is based on filters that utilize the relatively high horizontal-contrast density of the eye region to determine eye positions in a greyscale image of a human face. The system comprises a camera that scans an individual and is attached to a processor which performs required filtering. The filtering comprises a horizontal-contrast computation filter, a horizontal-contrast density determination filter, facial geometry reasoning and eye position determination.

Figure one illustrates one embodiment of the present invention.

Figure two illustrates a signal flow diagram of the filtering of the present invention.

Figure three illustrates the horizontal-contrast filter utilized in the present invention.

Figure four illustrates the horizontal-contrast density determination.

Figure five illustrates the results of the horizontal-contrast filter and the horizontal-contrast density determination.

Figure six illustrates facia geometry reasoning.

Figure seven illustrates another embodiment of facial geometry reasoning.

The document "Face recognition through geometrical features", COMPUTER VISION ECCV'92, 12 May 1992, ST. MARGHERITA, IT, page 792-800 R. BRUNELL & T. POGGIO: describes a face recognition system, in which the positions of the eyes in a face are partially determined by detecting horizontal edges in a grey-level image of the face.

The document "FACIAL FEATURE EXTRACTION FROM COLOR IMAGES", 12^{TH} IAPR. CONFERENCE B: PATTERN RECOGNITION AND NEURAL NETWORKS., vol. 2, 9 October 1994, pages 39-43, CHANG T C ET AL: describes a method of eye location including searching for regions of low intensity in a image of a face.

Figure eight illustrates eye position determination.

Figure nine illustrates eye localization for representative faces.

Figure ten illustrates three typical representative frames from a video sequence.

Figure eleven illustrates examples showing the performance of the system with and without glasses.

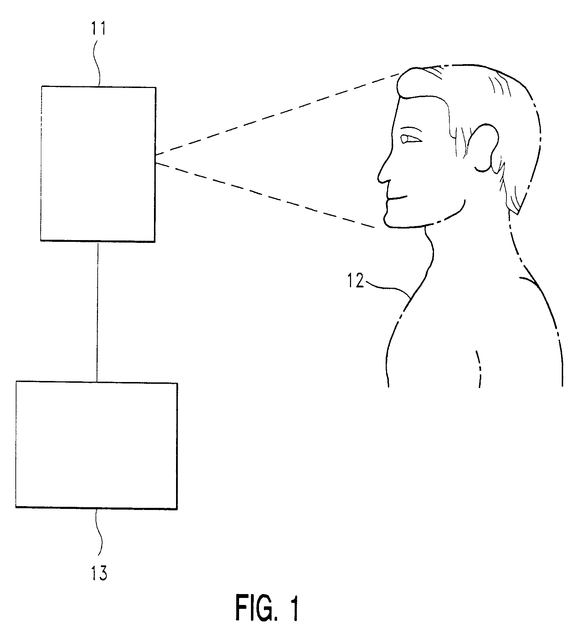

The present invention utilizes the relatively high horizontal contrast of the eye regions to locate eye positions. The basic system as shown in Figure 1 comprises a camera 11 that scans an individual 12 and is connected to a processor 13 which performs required filtering of the scanned image. The filtering includes a horizontal-contrast computation, a horizontal-contrast density determination, facial geometry reasoning and eye position determination.

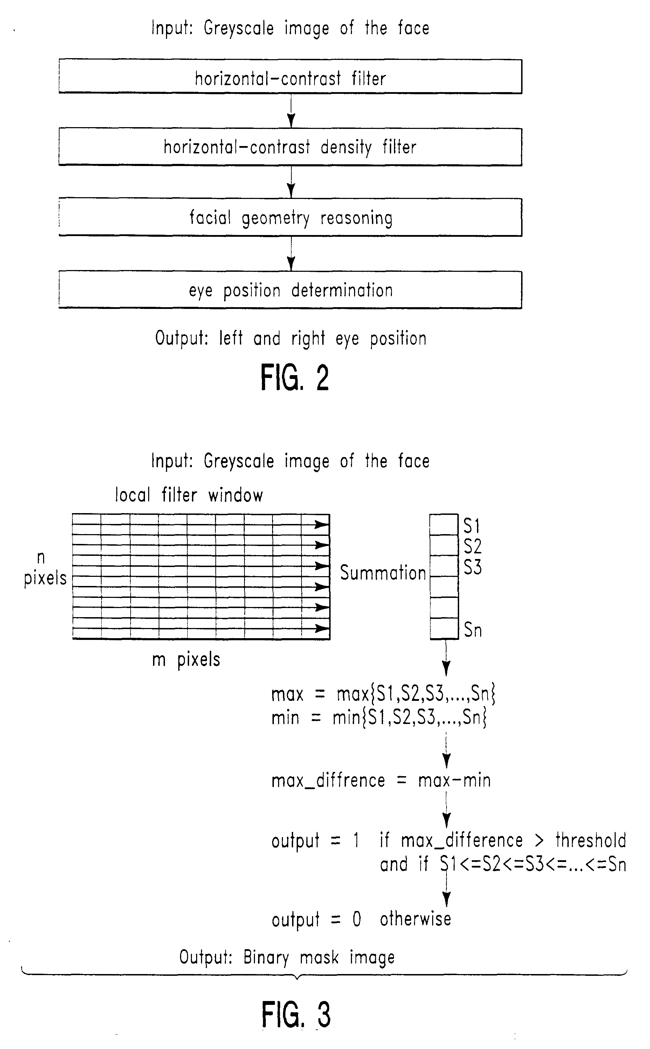

The signal flow diagram of the filtering of the present invention is shown in Figure 2. From Figure 2, the greyscale image of the face is an input to the horizontal-contrast filter. The output of the horizontal-contrast filter, the filtered image, is then sent to the horizontal-contrast density filter for further filtering. The output of the horizontal-contrast density filter flows to the facial geometry reasoning section of the system. The output from the facial geometry reasoning section is sent to the eye position determination section of the system. The output from the eye position determination section, the output of the present invention, is the left and right eye positions. The operation of the horizontal-contrast filter, horizontal-contrast density filter, facial geometry reasoning and eye position determination are described below.

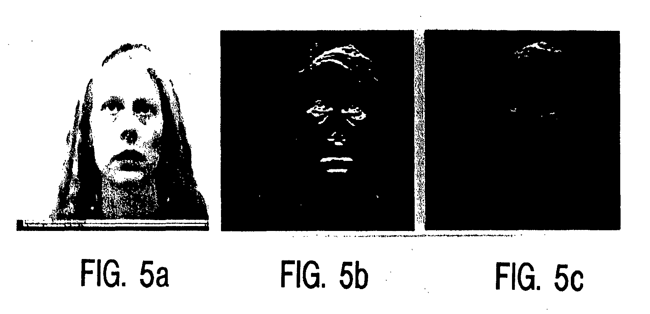

The signal flow diagram of the horizontal-contrast filter is shown in Figure 3. The horizontal-contrast filter operates as follows. In a small local window of the size m pixels by n pixels in the image, a summation in the horizontal direction over m pixels is performed at first for smoothing out the vertical structures within the filter window. Then, the maximum difference among the m pixels summation values is calculated. If this maximum difference is larger than a given threshold, the pixel is classified as a pixel with high horizontal-contrast. If the horizontal-contrast is high and if the values s1, ..., sn are in decreasing order, the output of the filter is "1" which is representative of the "white" pixels in an image. Otherwise, the output of the filter is "0" which corresponds to the "black" pixels in an image. As is known in the art, a window of size 3x3 pixels or 5x5 pixels is sufficient for an input image of size 256 by 256 pixels. A typical input greyscale image of the face and the corresponding output image, the binary mask image, of the horizontal-contrast filter are shown in figures 5a and 5b respectively.

It is important to note that the horizontal-contrast filter described above is only one of many possible embodiments. Most existing horizontal-edge detection techniques can also be used with some minor modifications.

There are two observations that can be made from the binary mask image that is output from the horizontal-contrast filter. First, the output of the horizontal-contrast filter is a "1" near the eyes and the hair, as well as near the nose and the lips. Second, the filter gives some spurious responses in the regions that do not correlate with facial features. In order to clean up the binary mask image and to generate a more suitable image for eye localization, horizontal-contrast density determination is required.

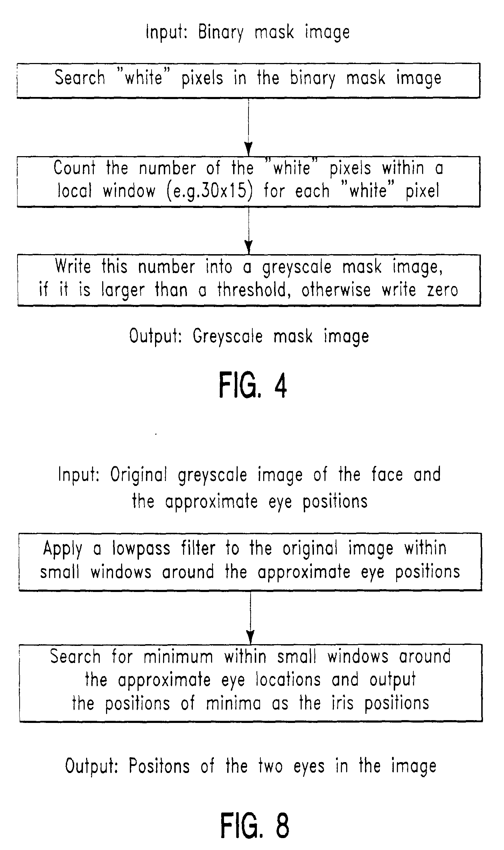

Horizontal-contrast density determination is shown in Figure 4. The binary mask image output from the horizontal-contrast filter is sent to the horizontal-contrast density filter. A search of "white" pixels in the binary mask image is performed. A relatively large window, such as 30 by 15 pixels is used to count and threshold the number of "white" pixels within this window for each "white" pixel in the binary mask image shown in Figure 5(b). In other words, for each "white" pixel, the number of "white" pixels in its neighborhood within the window are counted. Since the number of "white" pixels within the local window can be seen as the density of the pixels with high horizontal-contrast, this number is referred to as the horizontal contrast density. A threshold is then applied for removing the output pixels with contrast density below a threshold for cleaning up the effects of noise and irrelevant features. Figure 5(c) shows the greyscale mask image depicting the output of the horizontal-contrast density filter.

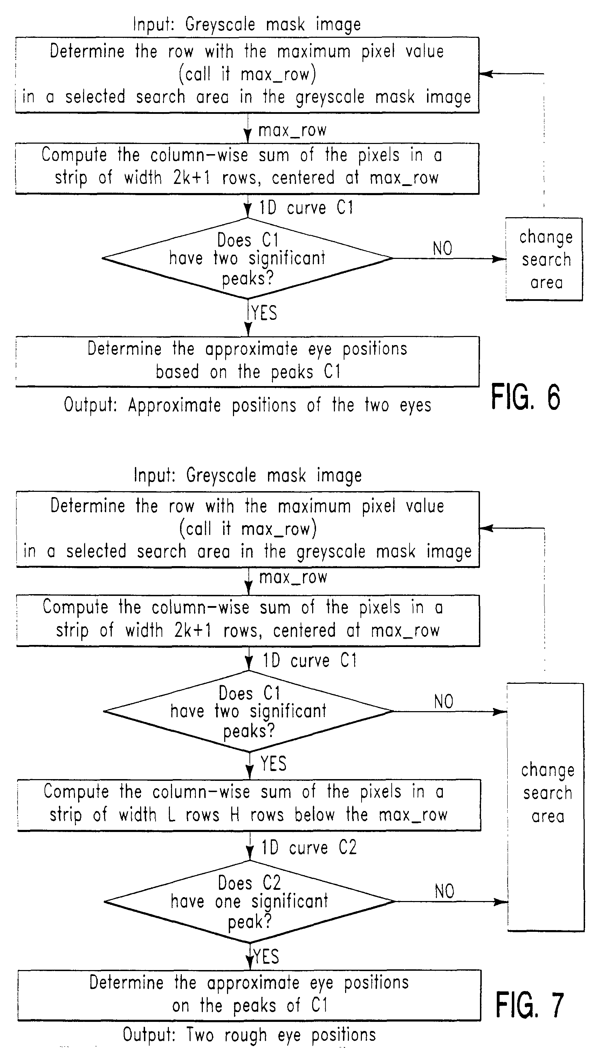

Figure 6 illustrates facial geometry reasoning where a-priori information about the geometry of facial features is used to detect and verify the eye positions. Since the eyes usually have a very high (and most likely the maximum) horizontal-contrast density, we search for the maximum intensity in a given area of the greyscale mask image received from the horizontal-contrast density filter for the first estimation. For most images, it can be assumed that the eyes are not located in the upper quarter of the image. Hence, the top one fourth of the mask image can be skipped for searching the maximum pixel value. Likewise, the bottom one fourth of the mask image can also be skipped for searching the eye locations. Eliminating these regions lowers the computational cost of the present invention. After the maximum pixel in the mask image is localized, verification of whether this position really corresponds to one of the two eye positions occurs. The fact that the two eyes should be located within a horizontal strip of width 2k+1 is utilized (allowing for a small tile of the head). The column-wise sum (projection) of the pixels in this strip are then computed. This results in a one dimensional (1D) curve C1 which has two significant peaks corresponding to the eye regions. If two significant peaks are not found, the search area is changed and the procedure is performed again.

Figure 7 illustrates a second embodiment of facial geometry reasoning. This embodiment utilizes more information on facial geometry to refine the verification procedure for eye localization. One possible approach is to use the additional information of the mouth to make the verification more robust. As shown in figure 5(c), the horizontal-contrast density filter usually has a strong response near the eyes as well as near the mouth. After detecting the peaks in C1, the system looks for a strong response for the mouth below the eyes. Since the distance between the two peaks in the C1 curve indicates the approximate distance between the two eyes, an approximate region for the mouth can be estimated. A one dimensional (1D) curve C2 for this region can then be generated. A strong peak in C2 verifies the position of the mouth, which in turn, verifies the position of the eyes.

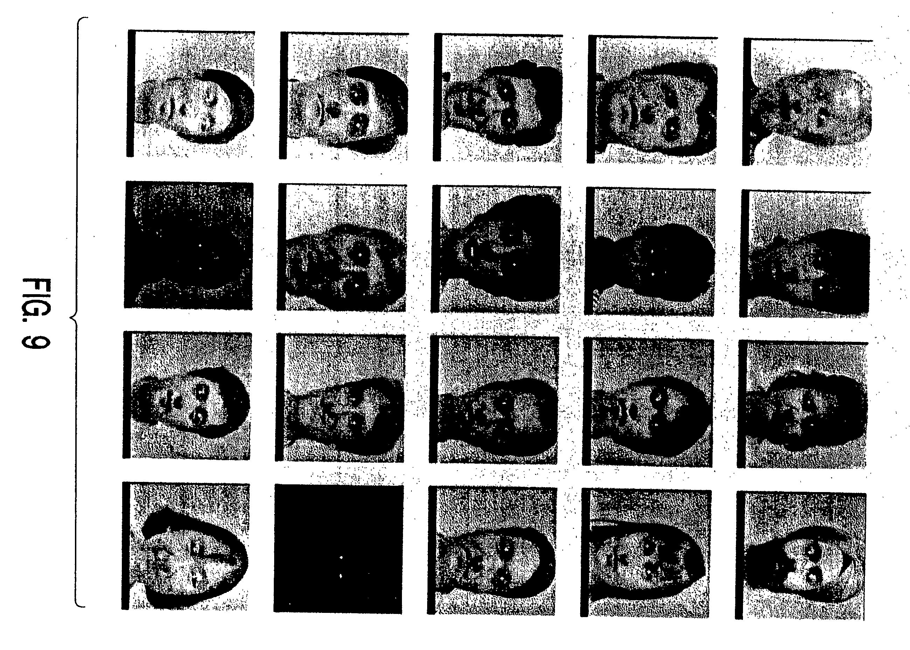

Figure 8 illustrates the eye position determination which refines the eye positions provided by the facial geometry reasoning of Figures 6 or 7. The original greyscale image of the face and the approximate eye positions provide the required inputs. A low pass filter is applied to the original greyscsale image within small windows around the approximate eye positions. A search then occurs for the minimum within small windows around the approximate eye locations and the positions of minima, the output, are the iris positions.

Testing of the present invention has been performed on video sequences of different people. The test results have been recorded under different indoor illumination conditions with minimum background clutter. All of the images were subsampled to a resolution of 256x256 pixels. The system needed about 200 msec. on a SUN SPARC 10 workstation for locating both eyes for a 256x256 image.

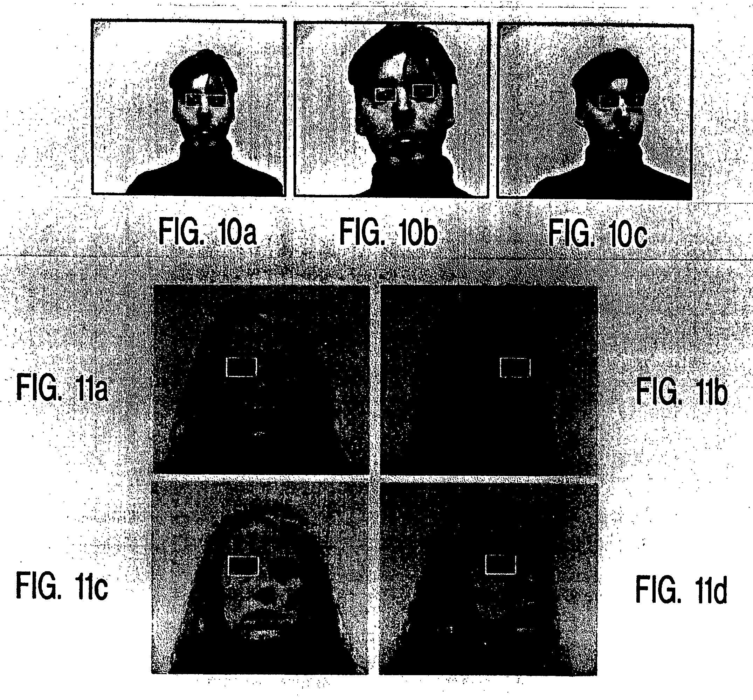

Figure 9 illustrates facial images of different people with a crosshair indicating the eye positions determined by the present invention. Figures 10a, 10b and 10c illustrate three typical representative frames from a video sequence with eye closure and variation of head size and orientation. Figure 10a represents the case when both eyes are closed. Figure 10b shows a change of head size and a slight change of head orientation. Figure 10c represents a change of head orientation. Figure 11 illustrates the performance of the system with and without eye glasses.

The present invention is very simple, fast and robust against different eye shapes, face orientations and other factors such as eye glasses. Another distinctive and important feature of the present invention is that the system can detect eye regions even when both eyes are closed. The system can operate very quickly on a general purpose computer. As an example, for a facial image with 256x256 pixels, the system utilizes only 200 msec. on a SUN SPARC 10 workstation. The present invention can be implemented with specialized hardware for real time performance.

It is not intended that the present invention be limited to the hardware or software arrangement, or operational procedures shown disclosed. This invention includes all of the alterations and variations thereto as encompassed within the scope of the claims as follows.

## Claims

1. An eye localization filter comprising: imaging means (11) for scanning an individual (12) to generate a greyscale image of a face of said individual; and, processor means (13) connected to said imaging means, wherein said processor means comprises;
horizontal-contrast computation filter means for detecting horizontal edges in said greyscale image of said face from said imaging means and for providing a corresponding binary mask image;
horizontal-contrast density determination filter means for determining the density of pixels which indicate horizontal edges within said binary mask image and for providing a greyscale mask image;
facial geometry reasoning means for receiving said greyscale mask image and for providing approximate positions of two eyes within said greyscale mask image; and,
eye position determination means for receiving said greyscale image of said face and said approximate positions, and for determining positions of said two eyes on the basis thereof.

2. An eye localization filter as claimed in claim 1, wherein said horizontal-contrast computation filter means comprises:
summation means for receiving said greyscale image of a face and for smoothing out vertical structures within a local filter window; and,
calculation means for horizontal structure for calculating maximum difference among summation values, for analyzing said maximum difference and for providing said binary mask image.

3. An eye localization filter as claimed in claim 1 or 2, wherein said horizontal-contrast density determination filter means comprises:
pixel search means for searching white pixels indicating horizontal edges in said binary mask image;
count means for counting a number of said white pixels within a local window; and,
threshold means for removing output pixels with contrast density below a threshold and for providing said greyscale mask image.

4. An eye localization filter as claimed in claim 1,2 or 3, wherein said facial geometry reasoning means comprises:
determination means for establishing a row having maximum white pixel value in a selected search area in said greyscale mask image;
compute means for computing column wise sum of pixels in a strip of said greyscale mask image; and
analysis means for establishing if said strip has two peaks and for providing said approximate positions of two eyes.

5. An eye localization filter as claimed in claim 1,2 or 3, wherein said facial geometry reasoning means comprises.
determination means for establishing a row having maximum pixel value in a selected search area in said greyscale mask image;
first compute means for computing column wise sum of pixels in a first strip of said greyscale mask image;
first analysis means for establishing if said strip has two peaks;
second compute means for computing column wise sum of pixels in a second strip below said first step; and,
second analysis means for establishing if said second strip has one peak and for providing said approximate positions of two eyes.

6. An eye localization filter as claimed in any preceding claim, wherein said eye position determination means comprises:
low pass filter means for filtering said greyscale mask image within small windows around said approximate positions of eyes; and
search means for searching minimum white pixel value within said small windows around said approximate positions of two eyes and for outputting said positions of two eyes.

7. An eye localization filter as claimed in any preceding claim, wherein said horizontal-contrast computation filter means further comprises:
summation means, receiving said greyscale image of a face, for smoothing out vertical structures within a local filter window.

8. A method of locating eyes comprising the steps of:
scanning an individual with a camera to generate a greyscale image of a face of said individual;
processing said scanned image, wherein said step of processing comprises:
performing horizontal-contrast computation filtering of said greyscale image of a face to detect horizontal edges therein, for providing a corresponding binary mask image;
determining the density of pixels which indicate horizontal edges in said binary mask image for providing a greyscale mask image;
performing facial geometry reasoning on said greyscale mask image for providing approximate positions of two eyes; and,
performing eye position determination of said greyscale image of a face and said approximate positions of two eyes for providing position of said two eyes.

9. A method of locating eyes as claimed in claim 8 wherein horizontal contrast computation filtering comprises the steps of:
performing a summation in a horizontal direction on said greyscale image of a face to thereby smooth out vertical structure within a filter window;
calculating maximum difference among summation values;
analyzing said maximum difference; and providing said binary mask image.

10. A method of locating eyes as claimed in claims 8 or 9, wherein horizontal-contrast computation filtering comprises the steps of:
performing a summation in a horizontal direction on a greyscale image of a face;
smoothing out vertical structures within a local filter window;
calculating maximum difference among summation values;
analyzing said maximum difference; and, providing a binary mask image.

11. A method of locating eyes as claimed in claim 8, 9 or 10, wherein performing facial geometry reasoning comprises the steps of:
establishing a row having maximum pixel value in a selected search area in said greyscale mask image;
computing column wise sum of pixels in a strip; analyzing if said strip has two peaks; and, providing said approximate positions of said two eyes.

12. A method of locating eyes as claimed in any of claims 8 to 11, wherein performing eye position determination comprises the steps of:
filtering said greyscale image within small windows around said approximate positions of said two eyes;
searching minimum within small windows around said approximate positions of said two eyes; and, outputting said positions of said two eyes.

## Patentansprüche

1. Augensuchfilter, umfassend eine Abbildungsvorrichtung (11), die eine Person (12) abtastet und ein Graustufenbild des Gesichts der Person erzeugt, und eine mit der Abbildungsvorrichtung verbundene Prozessorvorrichtung (13), wobei die Prozessorvorrichtung umfasst:
eine Filtervorrichtung, die den Kontrast in waagrechter Richtung berechnet und waagrechte Kanten in dem Graustufenbild des Gesichts aus der Abbildungsvorrichtung erkennt und ein entsprechendes binäres Maskenbild liefert;
eine Bestimmungsfiltervorrichtung für die waagrechte Kontrastdichte, die die Dichte der Pixel bestimmt, die waagrechte Kanten in dem binären Maskenbild anzeigen, und die ein Graustufen-Maskenbild liefert;
eine Gesichtsgeometrie-Beurteilungsvorrichtung, die das Graustufen-Maskenbild erhält und angenäherte Positionen der beiden Augen im Graustufen-Maskenbild liefert; und
eine Augenpositions-Bestimmungsvorrichtung, die das Graustufenbild des Gesichts und die angenäherten Positionen erhält und daraus die Positionen der beiden Augen bestimmt.

2. Augensuchfilter nach Anspruch 1, wobei die Berechnungsfiltervorrichtung für den waagrechten Kontrast umfasst:
eine Summiervorrichtung, die das Graustufenbild eines Gesichts erhält und in einem lokalen Filterfenster senkrechte Strukturen glättet; und
eine Berechnungsvorrichtung für die waagrechte Struktur, die die größte Differenz unter den Summenwerten berechnet, diese größte Differenz untersucht und das binäre Maskenbild liefert.

3. Augensuchfilter nach Anspruch 1 oder 2, worin das waagrechte Kontrastdichte-Bestimmungsfilter umfasst:
eine Pixelsuchvorrichtung, die weiße Pixel sucht, die waagrechte Kanten im binären Maskenbild anzeigen;
eine Zählvorrichtung, die die Anzahl der weißen Pixel in einem lokalen Fenster zählt;
eine Grenzwertvorrichtung, die Ausgabepixel entfernt, deren Kontrastdichte unter einem Grenzwert liegt, und die das Graustufen-Maskenbild liefert.

4. Augensuchfilter nach Anspruch 1, 2 oder 3, wobei die Gesichtsgeometrie-Beurteilungsvorrichtung umfasst:
eine Bestimmungsvorrichtung, die eine Zeile feststellt, die den größten Weißpixelwert in einem ausgewählten Suchbereich in dem Graustufen-Maskenbild aufweist;
eine Berechnungsvorrichtung, die spaltenweise die Pixelsumme in einem Streifen des Graustufen-Maskenbilds berechnet; und
eine Analysevorrichtung, die feststellt, ob der Streifen zwei Maximalwerte besitzt, und die die ungefähren Positionen der beiden Augen liefert.

5. Augensuchfilter nach Anspruch 1, 2 oder 3, wobei die Gesichtsgeometrie-Beurteilungsvorrichtung umfasst:
eine Bestimmungsvorrichtung, die eine Zeile feststellt, die den größten Pixelwert in einem ausgewählten Suchbereich in dem Graustufen-Maskenbild aufweist;
eine erste Berechnungsvorrichtung, die spaltenweise die Pixelsumme in einem ersten Streifen des Graustufen-Maskenbilds berechnet;
eine erste Analysevorrichtung, die feststellt, ob der Streifen zwei Maximalwerte besitzt;
eine zweite Berechnungsvorrichtung, die spaltenweise die Pixelsumme in einem zweiten Streifen unter dem ersten Streifen berechnet; und
eine zweite Analysevorrichtung, die feststellt, ob der zweite Streifen einen Maximalwert besitzt, und die die ungefähren Positionen der beiden Augen liefert.

6. Augensuchfilter nach irgendeinem vorhergehenden Anspruch, wobei die Augenpositions-Bestimmungsvorrichtung umfasst:
eine Tiefpassfiltervorrichtung, die das Graustufen-Maskenbild innerhalb kleiner Fenster um die angenäherten Augenpositionen filtert; und
eine Suchvorrichtung, die den kleinsten Weißpixelwert innerhalb der kleinen Fenster in der Umgebung der angenäherten Augenpositionen sucht und die Positionen der beiden Augen ausgibt.

7. Augensuchfilter nach irgendeinem vorhergehenden Anspruch, wobei die Berechnungsfiltervorrichtung für den waagrechten Kontrast zudem umfasst:
eine Summiervorrichtung, die das Graustufenbild eines Gesichts empfängt und innerhalb eines lokalen Filterfensters senkrechte Strukturen glättet.

8. Augensuchverfahren, umfassend die Schritte:
das Abtasten einer Person mit einer Kamera, um ein Graustufenbild des Gesichts der Person zu erzeugen;
das Verarbeiten des abgetasteten Bilds, wobei der Verarbeitungsschritt umfasst:
das Ausführen einer Filterungsberechnung für den waagrechten Kontrast an dem Graustufenbild eines Gesichts, um darin waagrechte Kanten zu erkennen und ein entsprechendes binäres Maskenbild zu liefern;
das Bestimmen der Dichte der Pixel, die waagrechte Kanten in dem binären Maskenbild anzeigen, um ein Graustufen-Maskenbild zu liefern;
das Ausführen der Gesichtsgeometriebeurteilung an dem Graustufen-Maskenbild, um die angenäherten Positionen der beiden Augen zu liefern; und
das Ausführen der Augenpositionsbestimmung anhand des Graustufenbilds eines Gesichts und der angenäherten Positionen der beiden Augen, um die Position der beiden Augen zu liefern.

9. Augensuchverfahren nach Anspruch 8, wobei die Filterungsberechnung für den waagrechten Kontrast die Schritte umfasst:
das Ausführen einer Summenbildung in waagrechter Richtung des Graustufenbilds eines Gesichts, um damit innerhalb eines Filterfensters senkrechte Strukturen zu glätten;
das Berechnen der größten Differenz zwischen den Summenwerten;
das Untersuchen der größten Differenz; und
das Liefern des binären Maskenbilds.

10. Augensuchverfahren nach Anspruch 8 oder 9, wobei die Filterungsberechnung für den waagrechten Kontrast die Schritte umfasst:
das Ausführen einer Summenbildung in waagrechter Richtung an einem Graustufenbild eines Gesichts;
das Glätten senkrechter Strukturen innerhalb eines lokalen Filterfensters;
das Berechnen der größten Differenz zwischen den Summenwerten;
das Untersuchen der größten Differenz; und
das Liefern des binären Maskenbilds.

11. Augensuchverfahren nach Anspruch 8, 9 oder 10, wobei das Ausführen der Gesichtsgeometriebeurteilung die Schritte umfasst:
das Feststellen einer Zeile mit dem größten Pixelwert in einem ausgewählten Suchbereich in dem Graustufen-Maskenbild;
das spaltenweise Berechnen der Pixelsumme in einem Streifen;
das Untersuchen, ob der Streifen zwei Maximalwerte aufweist; und
das Liefern der angenäherten Positionen der beiden Augen.

12. Augensuchverfahren nach irgendeinem der Ansprüche 8 bis 11, wobei das Ausführen der Augenpositionsbestimmung die Schritte umfasst:
das Filtern des Graustufenbilds innerhalb kleiner Fenster in der Umgebung der angenäherten Positionen der beiden Augen;
das Suchen des kleinsten Werts innerhalb der kleinen Fenster in der Umgebung der angenäherten Positionen der beiden Augen; und
das Ausgeben der Positionen der beiden Augen.

## Revendications

1. Un filtre de localisation des yeux comprenant : des moyens de formation d'image (11) pour scanner un individu (12) afin de fournir une image en demi-teinte de la face dudit individu ; et des moyens de traitement (13) reliés auxdits moyens de formation d'image, dans lequel lesdits moyens de traitement comprennent :
des moyens à filtre de calcul de contraste horizontal pour détecter des bords horizontaux de ladite image en demi-teinte de ladite face à partir desdits moyens de formation d'image et pour fournir une image de masque binaire correspondante ;
des moyens à filtre de détermination de densité de contraste horizontal pour déterminer la densité des pixels qui indiquent des bords horizontaux à l'intérieur de ladite image de masque binaire et pour fournir une image de masque en demi-teinte ;
des moyens de raisonnement de géométrie faciale pour recevoir ladite image de masque en demi-teinte et pour fournir des positions approchées des deux yeux à l'intérieur de ladite image de masque en demi-teinte ; et
des moyens de détermination des positions des yeux pour recevoir ladite image en demi-teinte de ladite face et lesdites positions approchées, et pour déterminer les positions desdits deux yeux sur la base de ceci.

2. Un filtre de localisation des yeux tel que revendiqué à la revendication 1, dans lequel lesdits moyens à filtre de calcul de contraste horizontal comprennent :
des moyens de sommation pour recevoir ladite image en demi-teinte de la face et pour éliminer par lissage des structures verticales à l'intérieur d'une fenêtre de filtre local ; et
des moyens de calcul de structure horizontale pour calculer une différence maximum parmi des valeurs de sommation, pour analyser ladite différence maximum et pour fournir ladite image de masque binaire.

3. Un filtre de localisation des yeux tel que revendiqué à la revendication 1 ou 2, dans lequel lesdits moyens à filtre de détermination de densité de contraste horizontal comprennent :
des moyens de recherche de pixels pour rechercher les pixels blancs indiquant les bords horizontaux de ladite image de masque binaire ;
des moyens de comptage pour compter le nombre desdits pixels blancs à l'intérieur d'une fenêtre locale ; et
des moyens à seuil pour supprimer les pixels de sortie présentant une densité de contraste en dessous d'un seuil et pour fournir ladite image de masque en demi-teinte.

4. Un filtre de localisation des yeux tel que revendiqué à la revendication 1, 2 ou 3, dans lequel lesdits moyens de raisonnement de géométrie faciale comprennent :
des moyens de détermination pour établir une rangée présentant une valeur de pixels blancs maximum dans une zone de recherche sélectionnée de ladite image de masque en demi-teinte ;
des moyens de calcul pour calculer une somme de pixels en colonne dans une bande de ladite image de masque en demi-teinte ; et
des moyens d'analyse pour établir si ladite bande présente deux pics et pour fournir lesdites positions approchées des deux yeux.

5. Un filtre de localisation des yeux tel que revendiqué à la revendication 1, 2 ou 3, dans lequel lesdits moyens de raisonnement de géométrie faciale comprennent :
des moyens de détermination pour établir une rangée présentant une valeur de pixels maximum dans une zone de recherche sélectionnée de ladite image de masque en demi-teinte ;
de premiers moyens de calcul pour calculer une somme de pixels en colonne dans une première bande de ladite image de masque en demi-teinte ;
de premiers moyens d'analyse pour établir si ladite bande présente deux pics ;
de seconds moyens de calcul pour calculer une somme de pixels en colonne dans une seconde bande en dessous de ladite première bande ; et
de seconds moyens d'analyse pour établir si ladite seconde bande présente un pic et pour fournir lesdites positions approchées des deux yeux.

6. Un filtre de localisation des yeux tel que revendiqué dans une quelconque revendication précédente, dans lequel lesdits moyens de détermination des positions des yeux comprennent :
des moyens à filtre passe-bas pour filtrer ladite image de masque en demi-teinte à l'intérieur de petites fenêtres autour desdites positions approchées des yeux ; et
des moyens de recherche pour rechercher une valeur de pixels blancs minimum à l'intérieur desdites petites fenêtres autour desdites positions approchées des deux yeux et pour délivrer lesdites positions des deux yeux.

7. Un filtre de localisation des yeux tels que revendiqué dans une quelconque revendication précédente, dans lequel lesdits moyens à filtre de calcul de contraste horizontal comprennent en outre :
des moyens de sommation, recevant ladite image en demi-teinte de la face, pour éliminer par lissage des structures verticales à l'intérieur d'une fenêtre de filtre local.

8. Un procédé de localisation des yeux comprenant les étapes consistant à :
scanner un individu à l'aide d'une caméra pour fournir une image en demi-teinte de la face dudit individu ;
traiter ladite image scannée, où ladite étape de traitement comprend les étapes consistant à :
effectuer un filtrage de calcul de contraste horizontal de ladite image en demi-teinte de la face afin de détecter des bords horizontaux à l'intérieur, pour fournir une image de masque binaire correspondante ;
déterminer la densité des pixels qui indiquent les bords horizontaux de ladite image de masque binaire pour fournir une image de masque en demi-teinte ;
effectuer un raisonnement de géométrie faciale sur ladite image de masque en demi-teinte pour fournir des positions approchées des deux yeux ; et
effectuer une détermination des positions des yeux de ladite image en demi-teinte de la face et desdites positions approchées des deux yeux pour fournir la position desdits deux yeux.

9. Un procédé de localisation des yeux tel que revendiqué à la revendication 8, dans lequel le filtrage de calcul de contraste horizontal comprend les étapes consistant à :
effectuer une sommation dans une direction horizontale sur ladite image en demi-teinte de la face de manière ainsi à éliminer par lissage une structure verticale à l'intérieur d'une fenêtre de filtre ;
calculer une différence maximum parmi des valeurs de sommation ;
analyser ladite différence maximum ; et fournir ladite image de masque binaire.

10. Un procédé de localisation des yeux tel que revendiqué à la revendication 8 ou 9, dans lequel le filtrage de calcul de contraste horizontal comprend les étapes consistant à :
effectuer une sommation dans une direction horizontale sur une image en demi-teinte de la face ;
éliminer par lissage des structures verticales à l'intérieur d'une fenêtre de filtre local ;
calculer une différence maximum parmi des valeurs de sommation ;
analyser ladite valeur de différence ; et fournir une image de masque binaire.

11. Un procédé de localisation des yeux tels que revendiqué à la revendication 8, 9 ou 10, dans lequel l'opération consistant à effectuer le raisonnement de géométrie faciale comprend les étapes consistant à :
établir une rangée présentant une valeur de pixels maximum dans une zone de recherche sélectionnée de ladite image de masque en demi-teinte ;
calculer une somme de pixels en colonne dans une bande ; analyser si ladite bande présente deux pics ; et fournir lesdites positions approchées desdits deux yeux.

12. Un procédé de localisation des yeux tel que revendiqué dans une quelconque des revendications 8 à 11, dans lequel l'opération consistant à effectuer une détermination des positions des yeux comprend les étapes consistant à :
filtrer ladite image en demi-teinte à l'intérieur de petites fenêtres autour desdites positions approchées desdits deux yeux ;
rechercher un minimum à l'intérieur de petites fenêtres autour desdites positions approchées desdits deux yeux ; et
délivrer ladite position desdits deux yeux.
